# EUROPÄISCHE PATENTSCHRIFT

(11) **EP 0 805 125 B1**
(45) Veröffentlichungstag und Bekanntmachung des Hinweises auf die Patenterteilung: **05.01.2000**
(21) Anmeldenummer: 97101516.9
(22) Anmeldetag: 31.01.1997
(51) Int. Cl.: C03C 3/091

(54) **Alkalifreies Aluminoborosilicatglas und seine Verwendung**
Alkali free aluminoborosilicate glass and its use
Verres aluminoborosilicates exempt de métaux alcalins et son utilisation

(30) Priorität: 30.04.1996 DE 19617344
(43) Veröffentlichungstag der Anmeldung: 05.11.1997
(73) Patentinhaber: Schott Glas, 55122 Mainz (DE); CARL-ZEISS-STIFTUNG trading as Schott Glas, 55122 Mainz (DE)
(72) Erfinder: Brix, Peter, Dr., 55116 Mainz (DE); Gaschler, Ludwig, 55120 Mainz (DE); Kloss, Thomas, 07745 Jena (DE); Lautenschläger, 07743 Jena (DE); Schneider, Klaus, 99510 Apolda (DE)

(56) Entgegenhaltungen:
- EP-A- 0 672 629
- CHEMICAL ABSTRACTS, vol. 124, no. 6, 5.Februar 1996 Columbus, Ohio, US; abstract no. 64262, XP002037145 & JP 07 277 762 A (HOYA CORP) 24.Oktober 1995
- CHEMICAL ABSTRACTS, vol. 126, no. 8, 24.Februar 1997 Columbus, Ohio, US; abstract no. 107590, VERITA, M. ET AL: XP002037146 & RIV. STN. SPER. VETRO, Bd. 25, Nr. 2, 1995, MURANO, IT, Seiten 65-69,
- CHEMICAL ABSTRACTS, vol. 122, no. 10, 6.März 1995 Columbus, Ohio, US; abstract no. 112607, YUAN, JIAN ET AL: XP002037147 & WUHAN GONGYE DAXUE XUEBAO, Bd. 16, Nr. 3, 1994, WUHAN, CN, Seite 50-2,73

## Beschreibung

Gegenstand der Erfindung ist ein alkalifreies Aluminoborosilicatglas für den Einsatz in der Displaytechnik, welches im Floatverfahren mit guter Qualität herstellbar ist.

Die Anforderungen an ein Glas, welches in der Displaytechnik, z. B. als Frontscheibe für einen flachen Bildschirm, eingesetzt werden soll, sind ausführlich von W. H. Dumbaugh, P. L. Bocko und F. P. Fehlner ("Glasses for flat-panel displays" in "High-Performance Glasses", hrsg. von M. Cable und J. M. Parker, Blackie and Son Limited, Glasgow und London, 1992) beschrieben worden. Die derzeit verfügbaren Gläser für derartige Anwendungen sind auch in dem Artikel "Advanced glass substrates for plat panel displays" von J. C. Lapp, P. L. Bocko und J. W. Nelson, Corning Research 1994 zusammengestellt:

Gläser, die als Substrate in LCDs (Liquid Crystal Displays), AMLCDs (Active Matrix Liquid Displays), TFELDs (Thin-film Electroluminescent Displays) oder PDPs (Plasma Display Panels) eingesetzt werden sollen, müssen eine gute thermische Wechselbeständigkeit und gute chemische Beständigkeiten gegenüber den im Herstellprozeß der Flachbildschirme verwendeten Reagenzien aufweisen sowie in ihrem thermischen Ausdehnungsverhalten an polykristallines Silicium angepaßt sein. Weiterhin sollten diesen Gläser möglichst alkalifrei sein, um eine "Vergiftung" von integrierten Schaltkreisen, die direkt auf dem Glassubstrat aufgebracht sein können, durch eindiffundierende Alkaliionen zu vermeiden. Herstellungsbedingte Anteile von Natriumoxid können dabei bis zu einem Gehalt von 1 000 ppm im Glas toleriert werden.

Die für die Herstellung von flachen Bildschirmen geeigneten Glasscheiben müssen ein gute Formstabilität bei den im Herstellprozeß auftretenden Temperaturen, einen geringen Schrumpf (Compaction) sowie eine sehr gute Qualität bezüglich der Abwesenheit von kristallinen Einschlüssen, Knoten und Blasen besitzen.

Notwendige Eigenschaften von Gläsern für Flachdisplayanwendungen sind also:
- ein thermischer Ausdehnungskoeffizient α_{20/300} von ca. 3,7 x 10⁻⁶/K (für die Anpassung an polykristallines Silicium)
- eine Temperatur bei der Viskosität bei 10¹³ dPas von über 700 °C (für geringe Compaction)
- eine gute chemische Beständigkeit
- eine geringe Entglasungstendenz.

Die bisher genannten Anforderungen werden im wesentlichen von einem kommerziell erhältlichen Glas (V1) erfüllt, das gemäß einer Analyse etwa die folgende Zusammensetzung (in Gew.-% auf Oxidbasis) besitzt: SiO₂ 57,7; B₂O₃ 8,4; Al₂O₃ 16,4; MgO 0,8; CaO 4,2; SrO 2,0; BaO 9,5; As₂O₃ 1,0. Dieses Glas wird nach einem speziellen "overflow-fusion"-Verfahren hergestellt, welches die Fertigung von Dünngläsern mit einer hohen Oberflächengüte gewährleistet. Allerdings dürfen die für dieses Verfahren geeigneten Gläser nur eine extrem geringe Kristallisationsneigung zeigen, d. h. die Liquidustemperatur (oberhalb dieser Temperatur lösen sich eventuell gebildete Kristalle wieder auf) muß deutliche unterhalb der Verarbeitungstemperatur V_{A} (Temperatur für die Viskosität bei 10⁴ dPas) liegen. Dies dürfte auch der hauptsächliche Grund für den sehr hohen V_{A}-Wert dieses Glases von > 1 300 °C sein. Je höher jedoch V_{A} ist, desto schneller schreitet die Korrosion der Feuerfestmaterialien voran und desto höher liegen die Primärenergiekosten bei der Glasherstellung aus dem Gemenge.

Ein weiterer Nachteil des genannten Glases V1 ist der hohe Anteil Arsenoxid, welches offensichtlich als Läutermittel für die geforderte Blasenfreiheit beim gewählten Herstellungsverfahren notwendig ist.

Abgesehen davon, daß es aufgrund der Toxizität von Arsenoxid sinnvoll ist, die Verwendung dieser Glaskomponente zu vermeiden, führt das Vorhandensein von Arsenoxid dazu, daß solche Gläser nicht auf einer Floatanlage gezogen werden können, da die hier vorliegenden reduzierenden Bedingungen (flüssiges Zinn, reduzierende Schutzgasatmosphäre, i. a. Formiergas) zu Ausscheidungen von metallischem Arsen führen, welche den Gläsern eine ungewünschte Graufärbung verleihen, was sie unbrauchbar macht.

In der Patentschrift US 3,496,401 werden für Halogenlampenkolben Glaszusammensetzungsbereiche (Gew.-% auf Oxidbasis) ähnlich der Zusammensetzung des Glases V1 angegeben: SiO₂ 55 - 70; B₂O₃ 0 - 10; Al₂O₃ 13 - 25; Erdalkalioxide 10 - 25. Es werden jedoch keine Angaben über die Läuterung gemacht. Die thermischen Dehnungen dieser Gläser sind niedrig, die Temperaturen für die Viskosität von 10¹³ dPas hoch. Ihre chemische Beständigkeit wird nicht beschrieben.

Die japanische Offenlegungsschrift JP 2-133 334 A beschreibt alkalifreie Gläser für elektronische Komponenten, die gute Wärmebeständigkeit, chemische Beständigkeit und optische Homogenität besitzen und folgende Zusammensetzungsbereiche aufweisen (Gew.-% auf Oxidbasis): SiO₂ 54 - 60; B₂O₃ 6 - 10; Al₂O₃ 10 - 15; MgO 0 - 2; CaO 8 - 15; BaO 4 - 10; ZnO 1 - 6; TiO₂ und/oder ZrO₂ 0,3 - 4.

Die europäische Offenlegungsschrift EP 0 672 629 A2 beschreibt Aluminosilicatgläser für Flachdisplays. Sie zeigt verschiedene Zusammensetzungsbereiche mit verschiedenen thermischen Ausdehnungskoeffizienten und unterschiedlicher Güte bzgl. der Säurebeständigkeit, die alle relativ große Mengen an Erdalkalioxiden benötigen.

Die deutsche Auslegeschrift DE-AS 20 58 210 beschreibt getrennte Phasen aufweisende Borosilicatgläser, die wenigstens 55 - 70 Gew.-% SiO₂ , 1 - 8,3 Gew.-% B₂O₃ , 7 - 23 Gew.-% Al₂O₃ und 6,7 - 16,5 Gew.-% MgO enthalten. Durch diese Komponenten wird eine Phasentrennung mittels einer Wärmebehandlung erzielt.

Die Aufgabe der vorliegenden Erfindung ist es, ein transparentes Glas für den Einsatz in der Displaytechnik zu finden, das einen thermischen Ausdehnungskoeffizienten α_{20/300} von ca. 3,7 x 10⁻⁶/K, eine Temperatur bei der Viskosität von 10¹³ dPas von über 700 °C und eine Verarbeitungstemperatur V_{A} von weniger als 1220 °C besitzt, eine sehr gute chemische Beständigkeit aufweist und im wesentlichen frei von Alkalioxiden ist. Weiterhin soll es frei von leicht reduzierbaren Bestandteilen und damit auf einer Floatanlage herstellbar sein.

Diese Aufgabe wird durch das im Patentanspruch 1 beschriebene Glas gelöst.

Das Glas enthält relativ wenig SiO₂ , nämlich 48 bis < 55 Gew.-%. Bei noch geringeren Anteilen nimmt die thermische Ausdehnung α zu hohe Werte an und verschlechtert sich die gute hydrolytische Beständigkeit; bei höheren Anteilen nimmt V_{A} zu hohe Werte an, und das Glas wird schlechter verarbeitbar. Bevorzugt wird daher der Bereich von 49 bis 53 Gew.-%.

Durch den hohen Al₂O₃ -Gehalt von > 20 bis 26 Gew.-% wird die gute chemische Beständigkeit und die hohe Entglasungsstabilität gefördert. Erst oberhalb von 26 Gew.-% steigt V_{A} zu sehr an und nimmt die Tendenz zur Phasentrennung zu. Ab 20 Gew.-% und weniger nehmen die Entglasungsstabilität und die Temperatur für die 10¹³-dPas-Viskosität stark ab. Bevorzugt wird der Bereich von > 20 bis 24 Gew.-%.

In einer älteren, noch nicht veröffentlichten deutschen Anmeldung der Anmelderin (Amtliches Aktenzeichen: P 196 03 698.4) wird ein Glas ähnlicher Zusammensetzung beschrieben. Es unterscheidet sich vom erfindungsgemäßen Glas vor allem durch seinen höheren SiO₂ -Gehalt (52 - 62 Gew.-%) und seinen geringeren Al₂O₃ - Anteil (12 - 20 Gew.-%). Im Vergleich zu diesem Glas weist das in der vorliegenden Anmeldung beschriebene Glas bei Beibehaltung der gewünschten thermischen Ausdehnung und den hohen chemischen Beständigkeiten eine höhere Entglasungsstabilität und eine noch niedrigere Verarbeitungstemperatur V_{A} auf.

Als Flußmittel zur Erleichterung der Schmelzbarkeit dient in den erfindungsgemäßen, aus dem oben beschriebenen Grund alkalifreien Gläsern B₂O₃ in einem Anteil von mindestens 7 Gew.-%. Auch für die gute chemische Beständigkeit und Entglasungsstabilität sowie für die elektrische Isolationsfähigkeit ist ein hoher Boroxidanteil erstrebenswert. Auch wird der Angriff der Schmelze auf die Feuerfestmaterialien herabgesetzt. Der Anteil an B₂O₃ darf jedoch nicht mehr als 15 Gew.-% ausmachen, weil sonst die Temperatur für die 10¹³-dPas-Viskosität nicht mehr den gewünschten hohen Wert erreicht. Bevorzugt wird der Bereich zwischen 9 und 13 Gew.-%.

Auch die Erdalkalioxide heben die Temperatur für die 10¹³-dPas-Viskosität an. Daher enthält das Glas 4 bis 12 Gew.-%. CaO (bevorzugt 6 - 11 Gew.-%), 0 - 8 Gew.-% MgO (bevorzugt 0 - 6 Gew.-%); 0 - 2 Gew.-% SrO (bevorzugt 0 - 1 Gew.-%) und 0 - 2 Gew.-% BaO (bevorzugt 0 - 1 Gew.-%). Dieser geringe BaO-Anteil begünstigt die gewünschte geringe Dichte der Gläser. Aufgrund der erheblichen Toxizität aller löslichen Bariumverbindungen sind zur Einhaltung der MAK-Werte gewisse Vorsorgemaßnahmen im Gemengehaus und bei der Heißverarbeitung zu treffen. Umso vorteilhafter ist es, daß in einer bevorzugten Ausführungsform der Erfindung auf die Zugabe dieser Komponente ganz verzichtet werden kann.

Vorzugsweise wird der Gesamtanteil an MgO, CaO, SrO und BaO auf < 12 Gew.-% beschränkt, da bei höheren Anteilen die Entglasungsneigung ansteigt und α_{20/300} zu hohe Werte annimmt.

In einer besonders vorteilhaften Ausführungsform der Erfindung werden die beiden Bestandteile MgO und CaO über Dolomit eingebracht, was die Logistik der Gemengezubereitung vereinfacht. Mit dem dadurch gegebenen Mol-Verhältnis von 1 : 1 beträgt das Gewichtsverhältnis CaO/MgO etwa 1,4.

Ferner enthält das erfindungsgemäße Glas 1 - 8 Gew.-% (bevorzugt 2 - 6 Gew.-%) ZnO und 0 - 2 Gew.-% ZrO₂.
ZrO₂ wirkt sich positiv auf die chemische Beständigkeit aus. Aufgrund seiner Schwerlöslichkeit darf sein Anteil aber 2 Gew.-% nicht überschreiten, da sonst Schmelzrelikte, sogenannte Zirkonnester, im fertigen Glas unvermeidbar sind.

Einen besonders bevorzugten Glaszusammensetzungsbereich, in dem aufgrund der ausgewogenen Kombination der Komponenten die Eigenschaften der erfindungsgemäßen Gläser besonders vorteilhaft vereint sind, stellt folgender Bereich dar (in Gew.-% auf Oxidbasis): SiO₂ 50 - 52; B₂O₃ 10,5 - 12; Al₂O₃ > 20 - 22,5; MgO 0 - 5,5; CaO 6 - 10; BaO 0 - 1; ZnO 2 - 3; ZrO₂ 0 - 2; SnO₂ 0,5 - 1,5.

Aus dem schon oben erwähnten Grund (Reduzierung zu elementarem Arsen) kann für die Läuterung von Gläsern, die nach dem eigentlichen Schmelzvorgang auf einer Floatanlage zu Scheiben weiterverarbeitet werden, kein Arsenoxid verwendet werden. Gleiches gilt für das sonst häufig alternativ verwendete Antimonoxid.

Ein anderes gängiges Läutermittel stellt Kochsalz dar, welches in alkalioxidhaltigen Schmelzen häufig eingesetzt wird und durch sein Verdampfen ab ca. 1 410 °C zur Läuterung beiträgt, wobei ein Teil des eingesetzten Natriumchlorids sich im Glas in Form von Natriumoxid wiederfindet; da Displaygläser jedoch möglichst alkaliarm sein sollen, ist die Verwendung dieses Läutermittels hier ebenfalls nicht möglich.

Weiter verbleiben als geeignete Läutermittel noch die Erdalkalichloride, von denen sich besonders das Bariumchlorid als wirkungsvoll erwiesen hat, da es ein ähnliches Läuterpotential wie Kochsalz aufweist. Die um ca. 150 °C höhere Siedetemperatur erfordert allerdings auch entsprechend höhere Schmelztemperaturen. Ein weiterer Nachteil dieser Komponente ist die schon erwähnte erhebliche Toxizität aller löslichen Bariumverbindungen.

Überraschenderweise wurde nun gefunden, daß bei Verwendung von 0,5 bis 2 Gew.-% Zinnoxid (bevorzugt 0,5 - 1,5 Gew.-%) als Läutermittel eine der Arsenläuterung vergleichbare Glasqualität erreicht werden kann. Eingesetzt wird dabei das vierwertige Zinndioxid SnO₂ , das durch Nitratzugaben im Gemenge in dieser Oxidationsstufe gehalten wird. Bei den hohen Temperaturen im Läuterteil der Schmelzwanne gehen die Zinnionen teilweise in den zweiwertigen Zustand über, wobei die gebildeten Sauerstoffblasen aufsteigen und damit zur Läuterung beitragen, indem in der Schmelze gelöste Gase in diese Blasen eindiffundieren und somit aus dem Glas entfernt werden. Nicht aufgestiegene, sehr kleine Blasen werden am Ende der Läuterphase, also bei niedrigeren Temperaturen, durch das nun vorhandene Zinnmonoxid SnO wieder resorbiert, welches dabei wieder zu SnO₂ oxidiert wird.
Ein weiterer Vorteil bei der Verwendung von SnO₂ als Läutermittel besteht darin, daß die Diffusion von Zinn aus dem Floatbad in die Glasoberfläche vermindert wird, weil der Konzentrationsunterschied als treibende Kraft der Diffusion bei zinnhaltigen Gläsern geringer ist.

Das Nitrat zur Stabilisierung der vierwertigen Zinn-Ionen kann über verschiedene Glaskomponenten eingebracht werden: z. B. als Ba(NO₃)₂ bzw. wenn, wie als bevorzugte Ausführungsform beschrieben, auf BaO verzichtet wird, als Mg(NO₃)₂, Ca(NO₃)₂, Al(NO₃)₃ o. ä.

Die erfindungsgemäßen Gläser sind hervorragend geeignet für die Verwendung als Substratgläser in der Displaytechnik.

Neben der Tatsache, daß sie alle für Flachdisplayanwendungen nötigen Eigenschaften besitzen, weisen die erfindungsgemäßen Gläser die folgenden besonderen Vorteile auf:

Sie sind auf einer Floatanlage herstellbar, da sie frei von leicht reduzierbaren Bestandteilen sind. Daß zur Läuterung also kein As₂O₃ verwendet wird, ist auch aus dem Umweltschutzgedanken heraus positiv, ebenso die Tatsache, daß auf BaO als Glaskomponente verzichtet werden kann. Die Gläser haben eine niedrige Verarbeitungstemperatur, was bei der Herstellung Energie und Kosten spart.

Die Gläser weisen eine sehr hohe chemische Beständigkeit auf und besitzen nur eine sehr geringe Entglasungstendenz.

### Beispiele:

Die Tabelle zeigt fünf erfindungsgemäße Gläser mit ihren Zusammensetzungen und ihren erfindungswesentlichen Eigenschaften.

Die Gläser wurden aus herkömmlichen Rohstoffen in Quarztiegeln bei 1 620 °C erschmolzen, die Schmelze wurde anderthalb Stunden bei dieser Temperatur geläutert, anschließend in induktiv beheizte Platintiegel umgegossen und zur Homogenisierung 30 Minuten bei 1 550 °C gerührt.

**Tabelle**

| Glaszusammensetzung (in Gew.-% auf Oxidbasis) und wesentliche Eigenschaften der Gläser | | | | | |
|---|---|---|---|---|---|
| | 1 | 2 | 3 | 4 | 5 |
| SiO₂ | 51,6 | 51,6 | 51,6 | 51,6 | 51,6 |
| B₂O₃ | 11,4 | 11,4 | 11,4 | 11,4 | 11,4 |
| Al₂O₃ | 21,0 | 21.0 | 21.5 | 21,0 | 21,0 |
| MgO | 2,0 | 4,6 | 2,0 | 4,2 | 1,5 |
| CaO | 9,0 | 6,4 | 9,0 | 5,8 | 8,5 |
| BaO | 1,0 | 1,0 | - | 1,0 | 1,0 |
| ZnO | 2,0 | 2,0 | 2,5 | 2,5 | 3,0 |
| ZrO₂ | 1,0 | 1,0 | 1,0 | 1,5 | 1,0 |
| SnO₂ | 1,0 | 1,0 | 1,0 | 1,0 | 1,0 |
| α_{20/300} ¹⁾ [10⁻⁶/K] | 3,71 | 3,61 | 3,66 | 3,65 | 3,64 |
| Tg ²⁾ [°C] | 700 | 701 | 700 | 701 | 697 |
| Temperatur für die 10¹³-dPas-Viskosität [°C] | 709 | 711 | 723 | 709 | 707 |
| Temperatur für die 10^{7,6}-dPas-Viskosität [°C] | 903 | 905 | 914 | 905 | 903 |
| Temperatur für die 10⁴-dPas-Viskosität [°C] | 1198 | 1205 | 1198 | 1198 | 1202 |
| Dichte [10³ kg/m³] | 2,526 | 2,527 | 2,521 | 2,528 | 2,530 |
| Compaction ³⁾ [ppm] | -5 | -5 | -5 | -6 | -8 |
| Hydrolyt. Beständigkeit nach ISO 719 [µg Na₂O/g] | 12 | 13 | 10 | 14 | 10 |
| H₂O ⁴⁾ [mg/cm²] | 0,03 | 0,03 | 0,02 | 0,03 | 0,02 |
| 5 % HCl⁵⁾ [mg/cm²] | 0,21 | 0,25 | 0,18 | 0,20 | 0,18 |
| 5 % NaOH⁶⁾ [mg/cm²] | 0,73 | 0,68 | 0,64 | 0,66 | 0,70 |
| 10 % NH₄F·HF⁷⁾ [mg/cm²] | 0,08 | 0,10 | 0,06 | 0,09 | 0,10 |
| Liquidustemperatur [°C] | 1250 | 1250 | 1250 | 1245 | 1245 |
| vₘₐₓ⁸⁾ [µm/h] | 11 | 16 | 14 | 15 | 10 |

| | | | | | |
|---|---|---|---|---|---|
| ¹⁾Thermische Dehnung im Temperaturbereich von 20 bis 300 °C | | | | | |
| ²⁾ Dilatometrische Glastransformationstemperatur nach DIN 52324 | | | | | |
| ³⁾ Schrumpf nach Temperung des Glases bei 400 °C für eine Stunde | | | | | |
| ⁴⁾ Gewichtsverlust nach Behandlung von polierten Glasplättchen (70 mm x 50 mm x 2 mm) in Wasser für 24 Stunden bei 95 °C | | | | | |
| ⁵⁾ Gewichtsverlust nach Behandlung von polierten Glasplättchen (70 mm x 50 mm x 2 mm) in 5 %iger Salzsäure für 24 Stunden bei 95 °C | | | | | |
| ⁶⁾ Gewichtsverlust nach Behandlung von polierten Glasplättchen (70 mm x 50 mm x 2 mm) in 5 %iger Natronlauge für 6 Stunden bei 95 °C | | | | | |
| ⁷⁾ Gewichtsverlust nach Behandlung von polierten Glasplättchen (70 mm x 50 mm x 2 mm) in 10 %iger NH₄F·HF-Lösung für 20 Minuten bei 20 °C | | | | | |
| ⁸⁾ Größtes beobachtetes Längenwachstum der gebildeten Kristalle (Bei einer Auftragung der Wachstumsgeschwindigkeit der Kristalle v gegen die Temperatur T entspricht die maximale Kristallwachstumsgeschwindigkeit vₘₐₓ der Wachstumsgeschwindigkeit bei der Temperatur KGₘₐₓ. Je kleiner vₘₐₓ ist, desto weniger kristallines Volumen wird gebildet. vₘₐₓ ist also eine Kenngröße für die Kristallisationsneigung (Entglasungsneigung).) | | | | | |

## Patentansprüche

1. Alkalifreies Aluminoborosilicatglas mit einer Temperatur bei der Viskosität von 10¹³ dPas von über 700 °C, einer Verarbeitungstemperatur V_{A} von weniger als 1220 °C und sehr guter chemischer Beständigkeit, das in einer Floatanlage herstellbar ist und folgende Zusammensetzung (in Gew.-% auf Oxidbasis) aufweist:
| | | | |
|---|---|---|---|
| SiO₂ | 48 | - | < 55 |
| B₂O₃ | 7 | - | 15 |
| Al₂O₃ | > 20 | - | 26 |
| MgO | 0 | - | 8 |
| CaO | 4 | - | 12 |
| BaO | 0 | - | 2 |
| SrO | 0 | - | 2 |
| ZnO | 1 | - | 8 |
| ZrO₂ | 0 | - | 2 |
| SnO₂ | 0,5 | - | 2 |

2. Aluminoborosilicatglas nach Anspruch 1 mit einer Zusammensetzung (in Gew.-% auf Oxidbasis) von
| | | | |
|---|---|---|---|
| SiO₂ | 49 | - | 53 |
| B₂O₃ | 9 | - | 13 |
| Al₂O₃ | > 20 | - | 24 |
| MgO | 0 | - | 6 |
| CaO | 6 | - | 11 |
| BaO | 0 | - | 1 |
| SrO | 0 | - | 1 |
| ZnO | 2 | - | 6 |
| ZrO₂ | 0 | - | 2 |
| SnO₂ | 0,5 | - | 1,5 |

3. Aluminoborosilicatglas nach Anspruch 1 oder 2,
**dadurch gekennzeichnet,**
daß die Summe aus MgO, CaO, BaO, SrO < 12 Gew.-% beträgt.

4. Aluminoborosilicatglas nach wenigstens einem der Ansprüche 1 bis 3,
**dadurch gekennzeichnet,**
daß es bis auf unvermeidliche Verunreinigungen frei von BaO ist.

5. Aluminoborosilicatglas nach wenigstens einem der Ansprüche 1 bis 3
**gekennzeichnet durch**
folgende Zusammensetzung (in Gew.-% auf Oxidbasis):
| | | | |
|---|---|---|---|
| SiO₂ | 50 | - | 52 |
| B₂O₃ | 10,5 | - | 12 |
| Al₂O₃ | > 20 | - | 22,5 |
| MgO | 0 | - | 5,5 |
| CaO | 6 | - | 10 |
| BaO | 0 | - | 1 |
| ZnO | 2 | - | 3 |
| ZrO₂ | 0 | - | 2 |
| SnO₂ | 0,5 | - | 1,5 |

6. Aluminoborosilicatglas nach wenigstens einem der Ansprüche 1 bis 5, mit einem Molverhältnis von CaO:MgO = 1 (= einem Gewichtsverhältnis von gerundet 1,4).

7. Verwendung des Aluminoborosilicatglases nach wenigstens einem der Ansprüche 1 bis 6 als Substratglas in der Displaytechnik.

## Claims

1. Alkali-free aluminoborosilicate glass which has a temperature of above 700°C at a viscosity of 10¹³ dPas, a working point V_{A} of below 1220°C and very good chemical resistance and which can be produced in a float plant and has the following composition (in % by weight, based on oxide):
| | | | |
|---|---|---|---|
| SiO₂ | 48 | - | < 55 |
| B₂O₃ | 7 | - | 15 |
| Al₂O₃ | > 20 | - | 26 |
| MgO | 0 | - | 8 |
| CaO | 4 | - | 12 |
| BaO | 0 | - | 2 |
| SrO | 0 | - | 2 |
| ZnO | 1 | - | 8 |
| ZrO₂ | 0 | - | 2 |
| SnO₂ | 0.5 | - | 2 |

2. Aluminoborosilicate glass according to Claim 1, having a composition (in % by weight, based on oxide) of
| | | | |
|---|---|---|---|
| SiO₂ | 49 | - | 53 |
| B₂O₃ | 9 | - | 13 |
| Al₂O₃ | > 20 | - | 24 |
| MgO | 0 | - | 6 |
| CaO | 6 | - | 11 |
| BaO | 0 | - | 1 |
| SrO | 0 | - | 1 |
| ZnO | 2 | - | 6 |
| ZrO₂ | 0 | - | 2 |
| SnO₂ | 0.5 | - | 1.5 |

3. Aluminoborosilicate glass according to Claim 1 or 2, characterized in that the sum of MgO, CaO, BaO and SrO is < 12% by weight.

4. Aluminoborosilicate glass according to at least one of Claims 1 to 3, characterized in that it is free from BaO apart from unavoidable impurities.

5. Aluminoborosilicate glass according to at least one of Claims 1 to 3, characterized by the following composition (in % by weight, based on oxide):
| | | | |
|---|---|---|---|
| SiO₂ | 50 | - | 52 |
| B₂O₃ | 10.5 | - | 12 |
| Al₂O₃ | > 20 | - | 22.5 |
| MgO | 0 | - | 5.5 |
| CaO | 6 | - | 10 |
| BaO | 0 | - | 1 |
| ZnO | 2 | - | 3 |
| ZrO₂ | 0 | - | 2 |
| SnO₂ | 0.5 | - | 1.5 |

6. Aluminoborosilicate glass according to at least one of Claims 1 to 5, having a CaO:MgO molar ratio = 1 (= a weight ratio of approximately 1.4).

7. Use of the aluminoborosilicate glass according to at least one of Claims 1 to 6 as substrate glass in display technology.

## Revendications

1. Verre d'aluminoborosilicate exempt d'alcali avec une température de plus de 700°C à la viscosité de 10¹³ dPa.s, une température de transformation V_{A} de moins de 1220°C et une très bonne résistance chimique, que l'on peut préparer dans un dispositif à verre flotté et présente la composition suivante (en % en poids sur base d'oxyde) :
| | | | |
|---|---|---|---|
| SiO₂ | 48 | - | <55 |
| B₂O₃ | 7 | - | 15 |
| Al₂O₃ | >20 | - | 26 |
| MgO | 0 | - | 8 |
| CaO | 4 | - | 12 |
| BaO | 0 | - | 2 |
| SrO | 0 | - | 2 |
| ZnO | 1 | - | 8 |
| ZrO₂ | 0 | - | 2 |
| SnO₂ | 0,5 | - | 2 |

2. Verre d'aluminoborosilicate suivant la revendication 1, avec une composition (en % en poids sur base d'oxyde) de :
| | | | |
|---|---|---|---|
| SiO₂ | 49 | - | 53 |
| B₂O₃ | 9 | - | 13 |
| Al₂O₃ | >20 | - | 24 |
| MgO | 0 | - | 6 |
| CaO | 6 | - | 11 |
| BaO | 0 | - | 1 |
| SrO | 0 | - | 1 |
| ZnO | 2 | - | 6 |
| ZrO₂ | 0 | - | 2 |
| SnO₂ | 0,5 | - | 1,5 |

3. Verre d'aluminoborosilicate suivant la revendication 1 ou 2, caractérisé en ce que la somme de MgO, CaO, BaO, SrO s'élève à <12% en poids.

4. Verre d'aluminoborosilicate suivant au moins l'une des revendications 1 à 3, caractérisé en ce qu'il est exempt de BaO à l'exception des impuretés inévitables.

5. Verre d'aluminoborosilicate suivant au moins l'une des revendications 1 à 3, caractérisé par la composition suivante (en % en poids sur base d'oxyde) :
| | | | |
|---|---|---|---|
| SiO₂ | 50 | - | 52 |
| B₂O₃ | 10,5 | - | 12 |
| Al₂O₃ | >20 | - | 22,5 |
| MgO | 0 | - | 5,5 |
| CaO | 6 | - | 10 |
| BaO | 0 | - | 1 |
| ZnO | 2 | - | 3 |
| ZrO₂ | 0 | - | 2 |
| SnO₂ | 0,5 | - | 1,5 |

6. Verre d'aluminoborosilicate suivant au moins l'une des revendications 1 à 5, avec un rapport molaire CaO : MgO = 1 (= un rapport de poids arrondi à 1,4).

7. Utilisation du verre d'aluminoborosilicate suivant au moins l'une des revendications 1 à 6, comme verre de base dans la technique d'affichage.
